# EUROPÄISCHE PATENTSCHRIFT

(11) **EP 4 045 249 B1**
(45) Veröffentlichungstag und Bekanntmachung des Hinweises auf die Patenterteilung: **04.10.2023**
(21) Anmeldenummer: 20792964.7
(22) Anmeldetag: 14.10.2020
(51) Int. Cl.: B29B 7/90, B29B 7/60, B29C 48/25, B29C 48/28, B29C 48/285

(54) **VORRICHTUNG UND VERFAHREN ZUM EINSPEISEN VON FLUFF UND GRANULAT IN EINEN EXTRUDER**
DEVICE AND METHOD FOR FEEDING FLUFF AND GRANULES INTO AN EXTRUDER
DISPOSITIF ET PROCÉDÉ D'INTRODUCTION DE PELUCHES ET DE GRANULÉS DANS UNE EXTRUDEUSE

(30) Priorität: 17.10.2019 DE 102019216053
(43) Veröffentlichungstag der Anmeldung: 24.08.2022
(73) Patentinhaber: Windmöller & Hölscher KG, 49525 Lengerich (DE)
(72) Erfinder: HASELMANN, Simon, 49525 Lengerich (DE)
(86) Internationale Anmeldenummer: PCT/EP2020/078832
(87) Internationale Veröffentlichungsnummer: WO 2021/074184

(56) Entgegenhaltungen:
- EP-B1- 2 828 058
- WO-A1-2013/126933
- DD-A3- 241 530
- DE-A1- 10 214 654
- JP-A- H11 192 618
- JP-A- 2001 301 009
- JP-U- S49 136 869

## Beschreibung

Die Erfindung betrifft eine Einspeiseeinrichtung und ein Verfahren zum Einspeisen von Fluff und Granulat in einen Extruder.

An vielen Vorrichtungen zur Herstellung von Folienbahnen, insbesondere an solchen Vorrichtungen, die eine Gießwalzen-Extrusionsanlage darstellen, fallen Streifen an, die durch Längsschnitt der Folienbahn entstehen. Die Folienbahn ist dabei insbesondere eine Kunststofffolienbahn. Solche Streifen sind vor allem Randstreifen, die prozessbedingt Ausschuss darstellen. Derartige Streifen werden zur Einspeisung in einen Extruder zunächst innerhalb eines Zerkleinerers zu kleinen Flocken, oft auch Fluff genannt, zerkleinert. Zur Einspeisung in den Extruder ist eine Einspeisevorrichtung vorgesehen, die jedoch gleichzeitigt frisches Granulat einspeist, so dass Fluff und Granulat gemeinsam in dem Extruder aufgeschmolzen werden und als Kunststoffschmelze der Extrusionsanlage zugeführt wird.

Die WO 2013/126933 A1 offenbart eine solche Vorrichtung. Auch die JP H11 192618 A zeigt eine solche Vorrichtung, jedoch mit einer Förderschnecke mit gegenläufigen Wendeln. Die JP S49 136869 U zeigt eine ähnliche Vorrichtung, wobei jedoch zwei Zuführtrichter und auch entsprechend zwei Förderschnecken ineinander liegend angeordnet sind.

Da der Strom der Schmelze durch das Extrusionsrezept vorgegeben ist, kann je nach Breite des Randstreifens der Anteil des Fluffs zur Erzeugung der Kunststoffschmelze variieren. Ist jedoch der Anteil des Fluffs zu groß, kann es passieren, dass der Extruder nicht richtig gefüllt ist. Das kann insbesondere an einem zu großen Luftanteil, der durch das Fluff in den Extruder eingetragen wird, liegen. Es kann letztendlich zu einer verminderten oder sogar nicht mehr akzeptablen Qualität der Folienbahn kommen.

Die JP 2001 301009 A schlägt daher vor, die Drehzahlen der Extruderschnecke und der Förderschnecke anzupassen. Dies kann dennoch zu einer schlechten Qualität der Folie führen, da diese in der Regel mehrschichtig ist und auch aus anderen Extruder gespeist wird.

Die Aufgabe der vorliegenden Erfindung ist es daher, eine Einspeisevorrichtung und ein Verfahren vorzuschlagen, so dass die Qualität der Kunststoffschmelze und somit die der daraus produzierten Folienbahn in einem akzeptablen Bereich bleiben.

Erfindungsgemäß wird diese Aufgabe durch die Merkmale des unabhängigen Vorrichtungsanspruchs 1 gelöst; bevorzugte Ausgestaltungen der erfindungsgemässen Vorrichtung sind in den davon abhängigen Ansprüchen angegeben.

Gemäß der vorliegenden Erfindung ist eine Einspeiseeinrichtung zum Einspeisen von Fluff und Granulat in einen Extruder mit einer Zuführvorrichtung vorgesehen mit einem auslaufseitigen Rohrstück für das Granulat, mit welcher das Granulat unter Ausbildung einer Granulatsäule zuführbar ist, wobei das Rohrstück mit einer Einlauföffnung des Extruders verbunden ist und mit einem Trichter mit einem Trichterauslauf zum Zuführen von Fluff, wobei innerhalft des Trichters eine Förderschnecke zum Fördern von Fluff vorgesehen ist, welche durch den Trichterauslauf hindurchragt und in das Rohrstück hineinragt, wobei das Fluff innerhalb der Granulatsäule förderbar ist. Die Erfindung zeichnet sich zudem dadurch aus, dass die Förderschnecke dazu einrichtet ist, auch Teile des Granulats zu fördern und/oder das Fluff zu verdichten.

In bekannten Anlagen des Standes der Technik rutscht das Granulat lediglich in den Extruder hinein.

Vorliegend wird auch das Granulat zumindest teilweise mittels der Förderschnecke in den Extruder hineingedrückt. Nach Erkenntnissen der Erfinder war es im Stand der Technik vorgekommen, dass das Fluff-Luft-Gemisch den Weg für das Granulat zum Extruder versperrt hat. Dadurch, dass die Förderschnecke nun auch aktiv das Granulat fördert, gelangt frisches Granulat verbessert zum Extruder, so dass das Mischungsverhältnis, das sich normalerweise aus dem Verhältnis des zugeführten Fluffs und des normalerweise notwendigen Granulats ergibt, auch im Extruder ankommt.

Erfindungsgemäß ist weiterhin vorgesehen, dass die Förderschnecke mindestens doppelgängig ausgebildet ist. Eine Förderschnecke besteht in der Regel aus einer Welle, um die herum eine spiralförmige Wendel angeordnet. Ist nun die Förderschnecke doppelgängig ausgebildet, bedeutet dies, dass eine zweite Wendel um die Welle herum angeordnet ist, wobei die beiden Wendeln ineinander verschachtelt sind. Analog kann eine Förderschnecke mehrgängig ausgebildet sein. Durch eine zumindest doppelgängige Förderschnecke kann höhere Verdichtung des Fluffs erreicht werden, da bei einer eingängigen Förderschnecke eine zu große Verdichtung mechanische Schäden, insbesondere an den Wendeln hervorrufen kann. Durch eine Verteilung der daraus resultierenden Kräfte auf zwei Wendeln werden solche Schäden vermieden und es können auch stärkere Verdichtungen des Fluffs erzeugt werden.

Zusätzlich oder alternativ ist es erfindungsgemäß vorgesehen, das Fluff mit einer Verdichtungseinrichtung zu verdichten, so dass Luft verdrängt wird und auch auf diese Weise das Verhältnis von Granulat zu Fluff im Extruder den notwendigen Wert einnimmt.

In einer vorteilhaften Ausführungsform der Erfindung ist vorgesehen, dass ein Teil des Endes der Förderschnecke, welches innerhalb des Rohrstücks angeordnet ist, breiter ist als der Trichterauslauf. Der Trichterauslauf bestimmt im Wesentlichen den Bereich innerhalb des Rohrstücks, in dem Fluff gefördert wird. Ist der Trichterauslauf beispielsweise mittig im oder oberhalb des Rohrstücks platziert, so verläuft auch der Fluff-Strom mittig umgeben von der Granulatsäule. Wenn nun die Förderschnecke breiter als der Trichterauslauf gestaltet ist, kommt auch die Granulatsäule mit ihr in Kontakt, so dass auch Granulat von der Förderschnecke gefördert wird.

Zusätzlich oder alternativ ist es vorteilhaft, wenn eine Granulatfördereinrichtung oberhalb des Trichterauslaufs angeordnet ist. Mit anderen Worten kann in den Trichter mittels einer Granulatfördereinrichtung frisches Granulat zugeführt so dass sich dieses bereits vor dem Einflussbereich der Förderschnecke vermischt, so dass die sich in dem Trichter befindliche Luft den Strom des Granulats nicht stört.

Ferner ist es vorteilhaft, wenn eine Staubabsaugeinrichtung zum Absaugen von Staub aus dem Trichter vorgesehen ist. Zusätzlicher Staub kann zu Qualitätseinbußen der Folienbahn führen, da dieser oft nicht aufgeschmolzen wird, so dass sich die Staubpartikel direkt in der Folie wiederfinden. Um dies zu verhindern, war es aus dem Stand der Technik bereits bekannt, einen leichten Überdruck anzulegen, der Staubpartikel aus dem Extruder entfernt. Dadurch wurde allerdings der Eintrag von Luft bzw. einem Luft-/Staubgemisch in den Extruder begünstigt. Um dies zu vermeiden, kann eine mit einem Unterdruck arbeitende Staubabsaugeinrichtung vorgesehen sein, mit welcher Staub und auch Luft aus dem Trichter entfernbar ist.

Die oben angegebene Aufgabe wird auch gelöst durch ein Verfahren nach dem unabhängigen Anspruch 5 zum Einspeisen von Fluff und Granulat in einen Extruder, bei dem mit einer Zuführvorrichtung mit einem auslaufseitigen Rohrstück das Granulat unter Ausbildung einer Granulatsäule zugeführt wird, wobei das Rohrstück mit einer Einlauföffnung des Extruders verbunden ist, und
bei dem mit einem Trichter mit einem Trichterauslauf Fluff zugeführt wird, wobei innerhalft des Trichters mit einer Förderschnecke Fluff gefördert wird, wobei die Förderschnecke durch den Trichterauslauf hindurchragt und in das Rohrstück hineinragt, wobei das Fluff innerhalb der Granulatsäule gefördert wird,
wobei die Förderschnecke auch Teile des Granulats fördert und/oder das Fluff verdichtet, wobei sich das Verfahren dadurch auszeichnet, dass die Förderschnecke mindestens doppelgängig ausgebildet ist.

Damit werden die gleichen Vorteile erzielt, die bereits weiter oben im Zusammenhang mit der erfindungsgemäßen Einspeiseeinrichtung beschrieben worden sind.

Besonders bevorzugt lassen sich die erfindungsgemäße Einspeisevorrichtung und das erfindungsgemäße Verfahren mit einer Folienmaschine kombinieren, bei der zumindest ein Extruder, eine Extrusionsdüse zum Extrudieren eines Kunststoffschmelzefilms, eine Kühleinrichtung zum Kühlen des Schmelzefilms und zum Überführen desselben in eine Folienbahn, eine Schneideinrichtung zum Abschneiden eines Randstreifens von der Folienbahn, ein Zerkleinerer zum Erzeugen von Fluff aus dem Randstreifen und eine Einspeiseeinrichtung zum Einspeisen von Fluff in den Extruder vorgesehen sind. Dabei ist dann vorgesehen, dass die Einspeiseeinrichtung gemäß einer in dieser Anmeldung beschriebenen erfindungsgemäßen Ausführungsform ausgestaltet ist.

Weitere Vorteile, Merkmale und Einzelheiten der Erfindung gehen aus der nachfolgenden Beschreibung hervor, in der unter Bezugnahme auf die Figuren verschiedene Ausführungsbeispiele im Einzelnen erläutert sind. Dabei können die in den Ansprüchen und in der Beschreibung erwähnten Merkmale jeweils einzeln für sich oder beliebige Kombinationen erwähnter Merkmale erfindungswesentlich sein. Im Rahmen der gesamten Offenbarung gelten Merkmale und Einzelheiten, die im Zusammenhang mit dem erfindungsgemäßen Verfahren beschrieben sind, selbstverständlich auch im Zusammenhang mit der erfindungsgemäßen Einspeiseeinrichtung und jeweils umgekehrt, so dass bezüglich der Offenbarung zu den einzelnen Aspekten der Erfindung stets wechselseitig Bezug genommen wird beziehungsweise werden kann. Merkmale einzelner, der in den Figuren dargestellten Ausführungsbeispiele, können selbstverständlich auch mit Ausführungsbeispielen anderer Figuren kombiniert werden. Die einzelnen Figuren zeigen:
- Fig. 1: Eine Schnittansicht einer Einspeiseeinrichtung nach dem Stand der Technik
- Fig. 2: Eine nicht-erfindungsgemässe Ausführungsform
- Fig. 3: Ein Ausführungsform der Erfindung
- Fig. 4: Eine weitere Ausführungsform der Erfindung
- Fig. 5: Eine weitere Ausführungsform der Erfindung

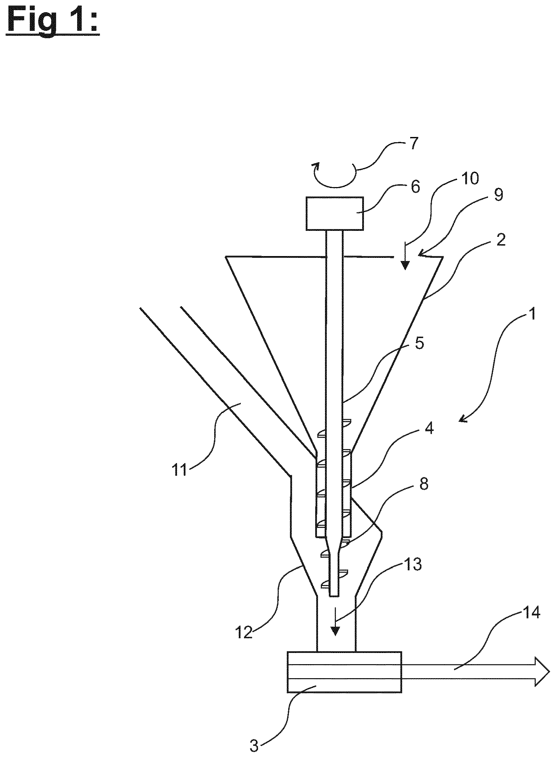

Fig. 1 zeigt eine Einspeiseeinrichtung 1 nach dem Stand der Technik, welche einen Trichter 2 umfasst, der sich in Richtung auf den Extruder 3 verjüngt und sich in den Trichterauslauf 4 fortsetzt. Durch den Trichter 2 und den Trichterauslauf 4 hindurch ragt eine Förderschnecke 5, die sich, angetrieben durch den Motor 6, in Richtung des Pfeiles 7 dreht. Die Förderschnecke umfasst eine Wendel 8, von der aufgrund der Schnittansicht einzelne Elemente sichtbar sind. Dem Trichter 2 ist durch eine Zufuhröffnung 9 in Richtung des Pfeiles 10 Fluff zuführbar. Fluff ist nicht dargestellt. Das Fluff wird durch die Rotation der Förderschnecke durch den Trichterauslauf 4 hindurch gefördert.

Des weiteren ist eine Granulatzuführeinrichtung 11 sichtbar, die sich in einem Rohrstück 12 fortsetzt. Die Förderschnecke setzt sich bis in dieses Rohrstück 12 fort, so dass auch Fluff in das Granulat hingefördert wird. Granulat und Fluff gelangen in Richtung des Pfeils 13 in den Extruder 3 hinein, werden dort aufgeschmolzen und gelangen entlang des Pfeils 14 in eine Folienmaschine.

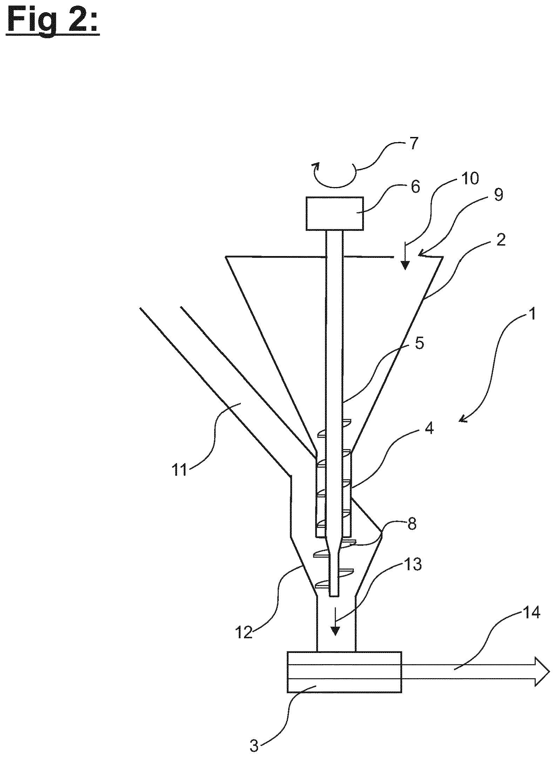

Die Figur 2 zeigt eine erste Ausführungsform der Erfindung, bei der die Wendel 8 unterhalb des Trichterauslaufs 4 breiter als innerhalb des Trichterauslaufs gestaltet ist. Dadurch wird direkt unterhalb des Trichterauslaufs durch die Förderschnecke nicht nur Fluff, sondern auch Granulat gefördert.

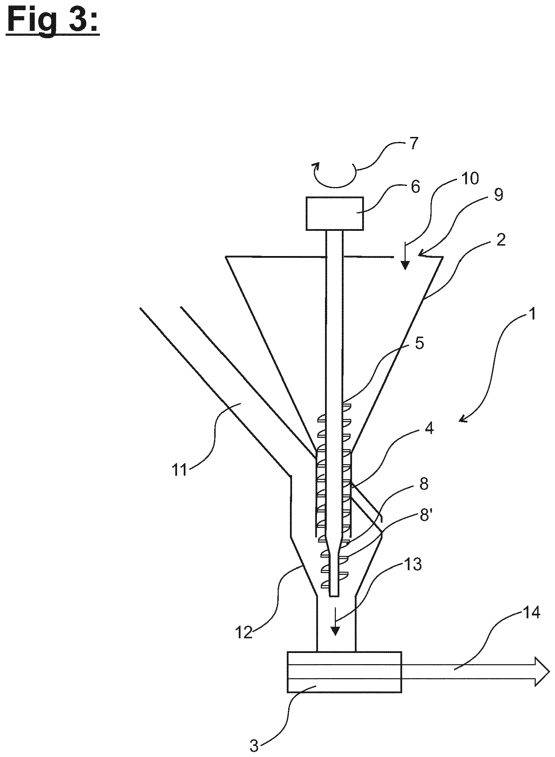

Die Figur 3 zeigt eine weitere Ausführungsform der Erfindung, bei der die Förderschnecke 5 doppelgängig ausgebildet ist. Dies bedeutet, dass die Förderschnecke zwei Wendeln 8 und 8' umfasst.

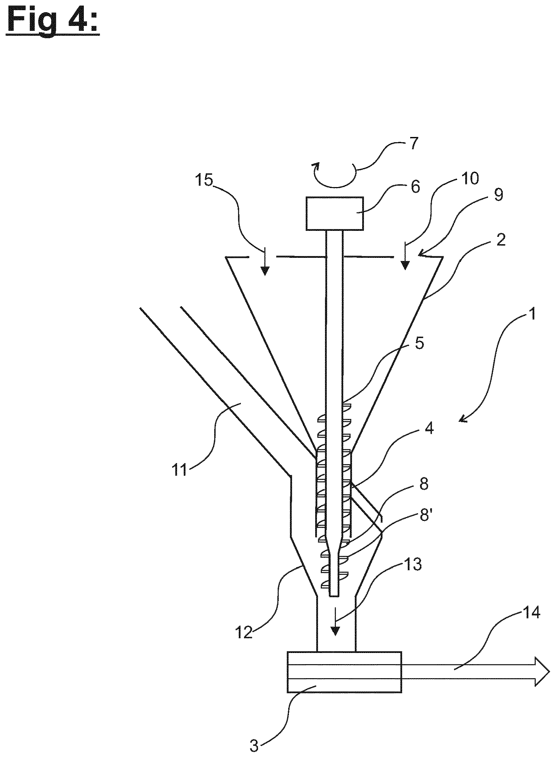

Die Figur 4 zeigt eine weitere Ausführungsform der Erfindung, bei der in Richtung des Pfeils 15 dem Trichter 2 auch ein Granulat zuführbar ist. Das Granulat kann beispielsweise über einen Abzweig der Granulatfördereinrichtung in den Trichter gelangen, so dass das Granulat über zwei Wege zuführbar ist. Es ist jedoch auch möglich ein weiteres Granulat zuzuführen. Oft werden mehrere unterschiedliche Granulate einem Extruder zugeführt, um damit die Eigenschaften einer Folie oder einer Schicht innerhalb der Folie maßzuschneidern.

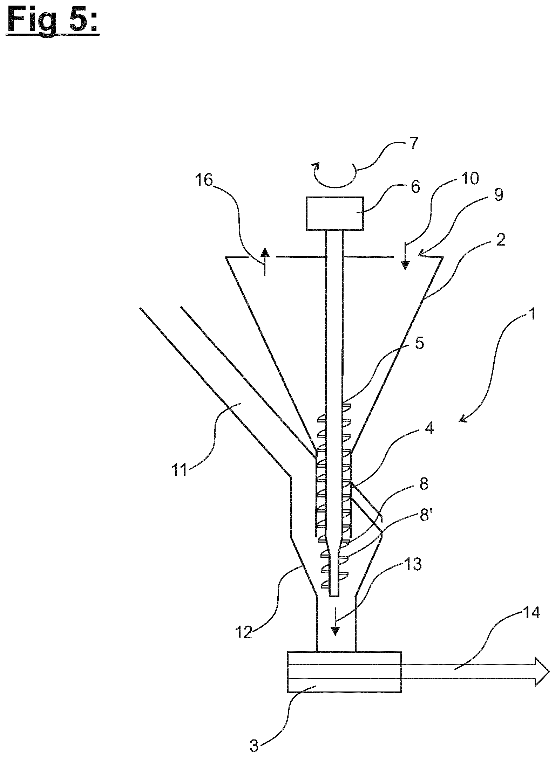

Die Figur 5 zeigt eine weitere Ausführungsform der Erfindung, bei der an dem Trichter 2 ein Unterdruck angelegt ist, so dass Luft und/oder Staub aus dem Trichter heraussaugbar ist. Dies wird durch den Pfeil 16 angedeutet.

| **Bezugszeichenliste** | |
|---|---|
| 1 | Einspeiseeinrichtung |
| 2 | Trichter |
| 3 | Extruder |
| 4 | Trichterauslauf |
| 5 | Förderschnecke |
| 6 | Motor |
| 7 | Pfeil |
| 8 | Wendel |
| 9 | Zufuhröffnung |
| 10 | Pfeil |
| 11 | Granulatzuführeinrichtung |
| 12 | Rohrstück |
| 13 | Pfeil |
| 14 | Pfeil |
| 15 | Pfeil |
| 16 | Pfeil |
| 17 | |
| 18 | |
| 19 | |
| 20 | |
| 21 | |
| 22 | |
| 23 | |
| 24 | |

## Patentansprüche

1. Einspeiseeinrichtung (1) zum Einspeisen von Fluff und Granulat in einen Extruder (3)
• mit einer Zuführvorrichtung (11) mit einem auslaufseitigen Rohrstück (12) für das Granulat, mit welcher das Granulat unter Ausbildung einer Granulatsäule zuführbar ist, wobei das Rohrstück (12) mit einer Einlauföffnung des Extruders (3) verbunden ist,
• mit einem Trichter (2) mit einem Trichterauslauf (4) zum Zuführen von Fluff, wobei innerhalb des Trichters (2) eine Förderschnecke (5) zum Fördern von Fluff vorgesehen ist, welche durch den Trichterauslauf (4) hindurchragt und in das Rohrstück (12) hineinragt, wobei das Fluff innerhalb der Granulatsäule förderbar ist, wobei die Förderschnecke (5) dazu einrichtet ist, auch Teile des Granulats zu fördern und/oder das Fluff mit einer Verdichtungseinrichtung zu verdichten,
**dadurch gekennzeichnet, dass**
die Förderschnecke (5) mindestens doppelgängig ausgebildet ist.

2. Einspeiseeinrichtung (1) nach Anspruch 1,
**dadurch gekennzeichnet, dass**
ein Teil des Endes der Förderschnecke (5), welches innerhalb des Rohrstücks (12) angeordnet ist, breiter ist als der Trichterauslauf (4).

3. Einspeiseeinrichtung nach einem der vorstehenden Ansprüche,
**dadurch gekennzeichnet, dass**
eine Granulatfördereinrichtung oberhalb des Trichterauslaufs (4) angeordnet ist.

4. Einspeiseeinrichtung nach einem der vorstehenden Ansprüche,
**dadurch gekennzeichnet, dass**
eine Staubabsaugeinrichtung zum Absaugen von Staub aus dem Trichter (2) vorgesehen ist.

5. Verfahren zum Einspeisen von Fluff und Granulat in einen Extruder (3),
bei dem mit einer Zuführvorrichtung (11) mit einem auslaufseitigen Rohrstück (12) das Granulat unter Ausbildung einer Granulatsäule zugeführt wird, wobei das Rohrstück (12) mit einer Einlauföffnung des Extruders (3) verbunden ist, und
bei dem mit einem Trichter (2) mit einem Trichterauslauf (4) Fluff zugeführt wird, wobei innerhalft des Trichters (2) mit einer Förderschnecke (5) Fluff gefördert wird, wobei die Förderschnecke (5) durch den Trichterauslauf (4) hindurchragt und in das Rohrstück (12) hineinragt, wobei das Fluff innerhalb der Granulatsäule gefördert wird, wobei die Förderschnecke (5) auch Teile des Granulats fördert und/oder das Fluff verdichtet,
**dadurch gekennzeichnet, dass**
die Förderschnecke (5) mindestens doppelgängig ausgebildet ist.

## Claims

1. A feeding device (1) for feeding fluff and granules into an extruder (3)
• having a feed device (11) with an outlet-side pipe section (12) for the granules, with which the granules can be supplied, forming a granule column, wherein the pipe section (12) is connected to an inlet opening of the extruder (3),
• having a funnel (2) with a funnel outlet (4) for feeding fluff, wherein a screw conveyor (5) for conveying fluff is provided within the funnel (2), which screw conveyor projects through the funnel outlet (4) and projects into the pipe section (12), wherein the fluff can be conveyed within the granule column, wherein the screw conveyor (5) is configured to also convey some of the granules and/or compact the fluff with a compacting device,
**characterized in that**
the screw conveyor (5) is designed so as to be at least double-threaded.

2. The feeding device (1) according to claim 1,
**characterized in that**
a part of the end of the screw conveyor (5), which is arranged within the pipe section (12) is wider than the funnel outlet (4).

3. The feeding device according to any one of the preceding claims,
**characterized in that**
a granule conveying device is arranged above the funnel outlet (4).

4. The feeding device according to any one of the preceding claims,
**characterized in that**
a dust extraction device for extracting dust from the funnel (2) is provided.

5. A method for feeding fluff and granules into an extruder (3)
in which the granules are fed with a feeder device (11) with an outlet-side pipe section (12), forming a granule column, wherein the pipe section (12) is connected to an inlet opening of the extruder (3),
and
in which fluff is fed with a funnel (2) with a funnel outlet (4), wherein fluff is conveyed within the funnel (2) with a screw conveyor (5), wherein the screw conveyor (5) projects through the funnel outlet (4) and projects into the pipe section (12), wherein the fluff is conveyed within the granule column, wherein the screw conveyor (5) also conveys some of the granules and/or compacts the fluff,
**characterized in that**
the screw conveyor (5) is designed so as to be at least double-threaded.

## Revendications

1. Dispositif d'introduction (1) pour l'introduction de duvet et de granulés dans une extrudeuse (3)
• avec un dispositif d'alimentation (11) avec un morceau de tube côté sortie (12) pour les granulés, avec lequel le granulé peut être alimenté en formant une colonne de granulés, dans lequel le morceau de tube (12) est relié avec une ouverture d'entrée de l'extrudeuse (3),
• avec une trémie (2) avec une sortie de trémie (4) pour l'introduction de peluches, dans lequel, à l'intérieur de la trémie (2), est prévu une vis sans fin de convoyage (5) pour le convoyage du duvet, qui traverse la sortie de trémie (4) et pénètre dans le morceau de tube (12), dans lequel le duvet peut être convoyé à l'intérieur de la colonne de granulés, dans lequel la vis sans fin de convoyage (5) est conçu pour convoyer également des parties des granulés et/ou pour comprimer le duvet avec un dispositif de compression,
**caractérisé en ce que**
la vis sans fin de convoyage (5) présente au moins deux filets.

2. Dispositif d'introduction (1) selon la revendication 1,
**caractérisé en ce que**
une partie de l'extrémité de la vis sans fin de convoyage (5), qui est disposée à l'intérieur du morceau de tube (12), est plus large que la sortie de trémie (4).

3. Dispositif d'introduction selon l'une des revendications,
**caractérisé en ce que**
un dispositif de convoyage de granulés est disposé au-dessus de la sortie de trémie (4).

4. Dispositif d'introduction selon l'une des revendications,
**caractérisé en ce que**
un dispositif d'aspiration de poussière est prévu pour l'aspiration de la poussière hors de la trémie (2).

5. Procédé d'introduction de duvet et de granulés dans une extrudeuse (3),
dans lequel, avec un dispositif d'alimentation (11) avec un morceau de tube côté sortie (12), les granulés sont introduits en formant une colonne de granulés, dans lequel le morceau de tube (12) est relié avec une ouverture d'entrée de l'extrudeuse (3) et
dans lequel, avec une trémie (2) avec une sortie de trémie (4), le duvet est introduit, dans lequel, à l'intérieur de la trémie (2), avec une vis sans fin de convoyage (5), le duvet est convoyé, dans lequel la vis sans fin de convoyage (5) traverse la sortie de trémie (4) et pénètre dans le morceau de tube (12), dans lequel le duvet est convoyé à l'intérieur de la colonne de granulés, dans lequel la vis sans fin de convoyage (5) convoie également des parties de granulés et/ou comprime le duvet,
**caractérisé en ce que**
la vis sans fin de convoyage (5) présente au moins deux filets.
